# EUROPÄISCHE PATENTANMELDUNG

(11) **EP 0 993 154 A2**
(43) Veröffentlichungstag der Anmeldung: **12.04.2000**
(21) Anmeldenummer: 99114722.4
(22) Anmeldetag: 28.07.1999
(51) Int. Cl.: H04L 12/56, H04L 29/06

(54) **Verfahren zur Signalisierung von Applikationen zwischen mindestens zwei Teilnehmern eines digitalen Kommunikationsnetzes sowie Einrichtung hierfür**

(30) Priorität: 17.09.1998 DE 19842569
(71) Anmelder: ROBERT BOSCH GMBH, 70442 Stuttgart (DE)
(72) Erfinder: Hans, Martin, 31141 Hildesheim (DE); Laumen, Josef, 31141 Hildesheim (DE); Fischer, Ralf, 31162 Salazdetfurth (DE); Behrens, Ralf, 31177 Harsum (DE)

(57) **Zusammenfassung**

Zur Signalisierung von Applikationen zwischen Teilnehmern (1,4) eines digitalen Kommunikationsnetzes werden Applikationskennungen (UAID) verwendet, die zusammen mit den zu übermittelnden Daten oder beim Verbindungsaufbau zwischen den Teilnehmern (1,4) übertragen werden und einem Zielteilnehmer (4) angeben, wie eine jeweilige Applikation zu verarbeiten ist.

Es erfolgt eine eindeutige Zuordnung insbesondere in Kommunikationsnetzen, die keine oder nur eine unvollständige Diensteunterstützung bieten.

## Beschreibung

### Stand der Technik

Die Erfindung geht aus von einem Verfahren zur Signalisierung von Applikationen zwischen mindestens zwei Teilnehmern eines digitalen Kommunikationsnetzes.

Aktuelle digitale Kommunikationssysteme wie z. B. ISDN und GSM bieten dem Anwender eine bestimmte Anzahl festgelegeter Dienste. Ein Basisdienst ist Sprache. Ferner werden bei GSM z. B. noch Fax und ein Kurzmitteilungsdienst (Short Message Service, SMS) sowie ein transparenter Datendienst geboten.

Zukünftige Kommunikationssysteme wie UMTS beabsichtigen, keine oder nur eine minimale Anzahl an Diensten zu unterstützen. Vielmehr soll nur noch ein Transportmedium geboten werden, auf dem eine unbeschränkte Zahl von Applikationen möglichst transparent übertragen werden. Mit anderen Worten soll das Netzwerk unberührt von der Applikation bleiben. Damit ist ein solches Kommunikationssystem auch zukünftigen Anwendungen offen.

### Vorteile der Erfindung

Mit den Maßnahmen der Erfindung ist eine Siganlisierung von Applikationen zwischen mindestens zwei Teilnehmern eines digitalen Kommunikationsnetzes auch in jenen Fällen möglich, wo Dienste nicht oder nur teilweise unterstützt werden. Dem teilnehmerseitigen Empfänger eines Datenstromes wird in jedem Falle mitgeteilt, um welche Applikation es sich handelt, wie diese senderseitig aufbereitet wurde, bzw. wie diese empfangsseitig zu verarbeiten, insbesondere zu dekodieren ist. Wenn der teilnehmerseitige Sender beispielsweise einen Videodatenstrom überträgt, erfährt der zielteilnehmerseitige Empfänger, daß dieser Datenstrom nur mit einem entsprechenden Videodecoder zu verstehen ist.

Die erfindungsgemäße Signalisierung läßt die eigentlichen Netzwerkprotokolle unberührt, da die Applikationskennung von einer jeweiligen Applikation gesetzt werden kann und von den darunterliegenden Protokollschichten transparent übertragen wird. Auf diese Weise ist das Kommunikationsnetz offen für neue Applikationen. Zukünftige Applikationen können in bestehenden Kommunikationsnetzen durch einfaches Setzen der neuen Applikationskennung integriert werden. Damit können neue Applikationen auch in ältere Endgeräte einfach heruntergeladen werden.

Applikationen können von einem teilnehmerseitigen Empfänger eindeutig erkannt werden und den entsprechenden Decodern zugeführt, bzw. bei Nichtunterstützung abgewiesen werden. Standardisierte Applikationskennungen können von einer zentralen Stelle/Organisation aus vergeben werden. Eine genehmigte Applikationskennung bezeichnet dann eindeutig eine einzige Applikation.

### Zeichnungen

Anhand von Zeichnungen werden Ausführungsbeispiele der Erfindung näher erläutert. Es zeigen
Figur 1 zwei Teilnehmer eines Kommunikationsnetzes mit Einrichtungen zur Applikationssignalisierung,
Figur 2 eine Signalisierung von Applikationen bei leitungsvermittelnder Übertragung,
Figur 3 ein mögliches Paketformat mit einer Applikationskennung,
Figur 4 ein mögliches Paketformat mit temporärer Applikationskennung.

### Beschreibung von Ausführungsbeispielen

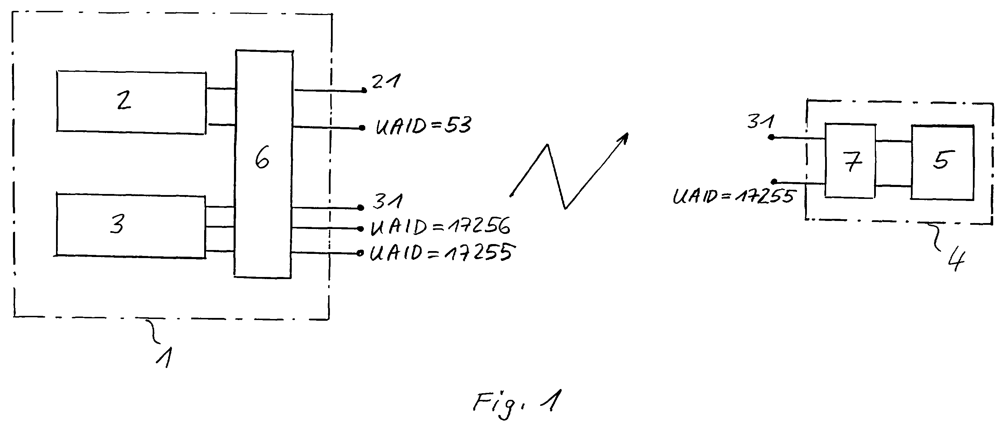

Figur 1 zeigt zwei Teilnehmer - Endgeräte eines Kommunikationsnetzes, die Applikationen, d. h. verschiedene Dienste, miteinander austauschen wollen. Das Endgerät 1 des ersten Teilnehmers besitzt beispielsweise die Fähigkeit eine audiovisuelle Verbindung basierend auf dem Videocodierungsstandard H.263 mittels des Videocodec 2 und den Sprachcodierungsstandards G.723 und G.711 mittels des Sprachcodec 3 aufzubauen. Das Endgerät 4 des Zielteilnehmers besitzt beispielsweise nur einen Sprachcodec 5 nach dem Sprachcodierungsstandard G.711. Um dem Zielteilnehmer mitzuteilen, wie eine jeweilige Applikation zu verarbeiten, d. h. insbesondere zu decodieren ist, werden mit den zu übermittelnden Daten oder bei einem Verbindungsaufbau zwischen den Teilnehmern Applikationskennungen für die verschiedenen Applikationen ausgetauscht. Dazu ist eine jeweils einem Endgerät senderseitig zugeordnete Baugruppe 6 vorgesehen, die Applikationskennungen für die einzelnen Applikationen bereitstellt. Eine Applikationskennung UAID (Abkürzung angelehnt an die vorgestellte Anwendung UMTS Application Identifyer) besteht aus einem binären Wort insbesondere fester Länge. Nachfolgend sei die Applikationskennung UAID als ein 16 Bit breites binäres Wort angenommen. Damit lassen sich 2¹⁶ = 65536 verschiedene Applikationen signalisieren. An den Ausgängen der Baugruppe 6 erscheint dann ein Videodatenstrom 21 mit einer Applikationskennung UAID = 53 sowie ein Audiodatenstrom 31 mit den Applikationskennungen UAID = 17256 und UAID = 17255. Im Endgerät 4 ist empfangsseitig eine Auswerteeinheit 7 vorgesehen zur Auswertung der übertragenen Applikationskennungen UAID und zur Weiterleitung des hierzu gehörigen Datenstromes - hier Audiodatenstrom 31 - an den/die entsprechenden Decoder - hier nur Sprachdecoder 5.

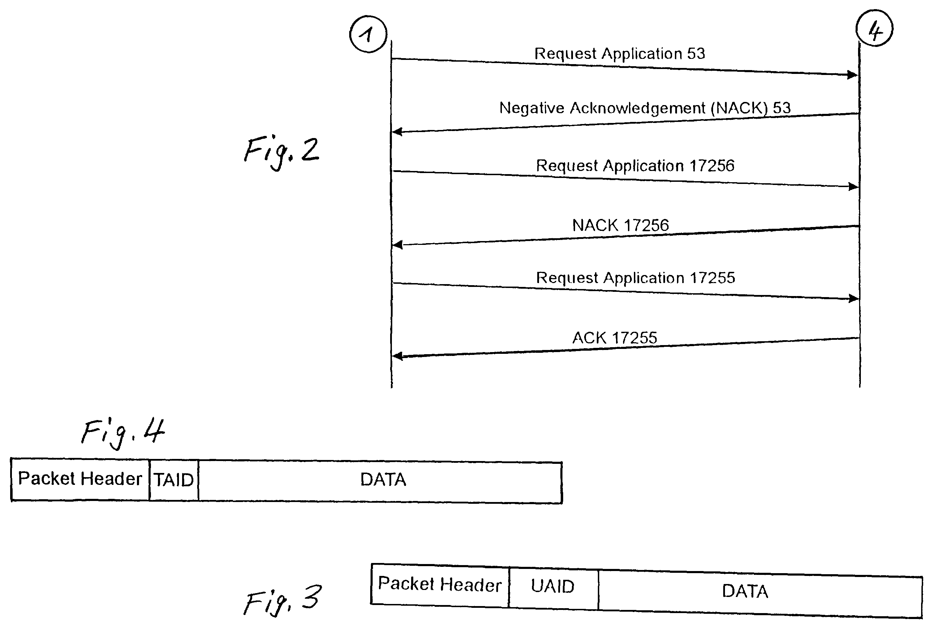

Bei digitalen Kommunikationsnetzen kann prinzipiell zwischen leitungs- und paketvermittelnden Netzen unterschieden werden. Ein leitungsvermittelndes Netz baut eine feste Verbindung zwischen zwei Kommunikationspartnern auf. In diesem Fall wird die Applikationskennung UAID nur beim Verbindungsaufbau signalisiert. Figur 2 zeigt vereinfacht die Signalisierung der Applikationen beim Verbindungsaufbau zwischen den Endgeräten 1 und 4, wobei prinzipiell auch mehr als zwei Endgeräte vorgesehen sein können. Beim Verbindungsaufbau von Endgerät 1 zum Endgerät 4 signalisiert Endgerät 1, daß eine Videoapplikation (-anwendung) gemäß Applikationskennung UAID = 53 gewünscht ist (Request Application 53). Da Endgerät 4 aber nur ein einfaches Sprachterminal ist, verneint es die für sie unbekannte Applikationskennung UAID = 53 (Negative Acknowledgement 53). Als nächstes versucht Endgerät 1 den sehr effizienten Sprachcodec G.723 entsprechend der Applikationskennung UAID = 17256 zu nutzen. Auch dieses muß das veraltete Endgerät auf der Gegenseite ablehnen (NACK 17256). Schließlich wird die Anfrage nach dem einfachen G.711 Sprachcodec (UAID 17255) bejaht und daraufhin eine Nur - Sprachverbindung zu Endgerät 4 aufgebaut.

In einem paketvermittelndem Netz sendet ein Teilnehmer Datenpakete aus, die über jeweils unterschiedliche Wege zu einem oder mehreren Kommunikationspartnern gelangen können. Um eine eindeutige Identifizierung des Paketinhaltes zu gewährleisten, wird die Applikationskennung UAID erfindungsgemäß mit jedem Paket übertragen. Figur 3 zeigt den Aufbau eines solchen möglichen Paketformates. Die Applikationskennung UAID wird in einem festen Feld im Pakteformat der zu übermittelnden Daten übertragen und zwar vorzugsweise zwischen einem Paketkopf (Packet Header) und einem Datenfeld (Data).

In einer Ausgestaltung der Erfindung werden nach einem vorherigen Austausch der Applikationskennungen UAID zwischen den Kommunikationspartnern, diese temporär, d. h. für die Dauer des Informationsaustausches, auf kürzere Binärworte abgebildet (Einsparung von Bandbreite). Diese sogenannte TAID (temporal Application Identifyer) kann beispielsweise aus 3 Bit bestehen und damit acht verschiedene Applikationen für die Dauer des Informationstausches signalisieren. Dadurch steht pro Paket mehr Platz für die Nutzdaten zur Verfügung. Nachfolgende Tabelle zeigt eine mögliche Zuordnung zwischen der UAID und der TAID und Figur 4 das entsprechende Paketformat.

| Applikation | UAID | TAID |
|---|---|---|
| Videokodierung nach H.263 | 53 | 0 |
| Audiokodierung nach G.723 | 17265 | 1 |
| G4 Fax | 3452 | 2 |

Die Applikationskennung UAID kann beispielsweise durch einen Code variabler Länge, z. B. dem Huffmann-Code, dargestellt werden. Eine weitere Ausgestaltung ist die Unterteilung des Wertebereiches der Applikationskennung in verschiedene Klassen z. B. für Audiodienste, Videodienste, Datendienste usw.

Wenn zwischen Teilnehmern mehrere Applikationen gleichzeitig ausgetauscht werden, können mittels der Applikationskennung auch unterschiedliche Datenkanäle insbesondere im Parallelbetrieb bereitgestellt werden. Mittels der Applikationskennungen können auch Datenverbindungen beispielsweise hinsichtlich Kanalcodierung, Datenrate, Datenformat insbesondere im Dialogverkehr frei ausgehandelt werden. Damit können Verbindungen einfacher optimiert werden und es kann eine individuelle Zuteilung von Kanalkapazität erfolgen, insbesondere wenn mehr als zwei Teilnehmer an das Kommunikationsnetz gleichzeitig angeschlossen sind.

Applikationskennungen werden vorzugsweise von einer zentralen Stelle/Organisation aus vergeben bzw. müssen dort beantragt werden (ähnlich den "Portnumbers" beim Internet-Protokoll. Dort vergibt die Internet Assigned Numbers Authority (IANA) diese Nummern). Dadurch ergibt sich eine global einheitliche und damit eindeutige Zuordnung zwischen Applikation und Applikationskennung UAID.

Applikationskennungen werden vorzugsweise von einer Applikationsschicht des OSI-Referenzmodells gesetzt und von den tieferen Schichten des Kommunikationsprotokolls transparent übertragen. Damit ist das Kommunikationsnetz offen für neue Applikationen. Die Erfindung eignet sich insbesondere für Kommunikationsnetze, die keine Diensteunterstützung bieten oder, wie z. B. UMTS, nur eine unvollständige Diensteunterstützung bieten.

## Patentansprüche

1. Verfahren zur Signalisierung von Applikationen zwischen mindestens zwei Teilnehmern (1,4) eines digitalen Kommunikationsnetzes, wobei zur Signalisierung einer Applikation eine Applikationskennung (UAID), bestehend aus einem binären Wort insbesondere fester Länge verwendet wird, welche zusammen mit den zu übermittelnden Daten oder beim Verbindungsaufbau zwischen den Teilnehmern (1,4) übertragen wird und welche einem Zielteilnehmer (4) angibt, wie eine jeweilige Applikation zu verarbeiten ist.

2. Verfahren nach Anspruch 1, dadurch gekennzeichnet, daß bei leitungsvermittelnden Kommunikationsnetzen die Applikationskennung (UAID) beim Verbindungsaufbau zwischen den Teilnehmern (1,4) signalisiert, bzw. ausgetauscht wird.

3. Verfahren nach Anspruch 1, dadurch gekennzeichnet, daß bei paketvermittelnden Kommunikationsnetzen die Applikationskennung (UAID) in einem festen Feld im Paketformat der zu übermittelnden Daten übertragen wird.

4. Verfahren nach Anspruch 3, dadurch gekennzeichnet, daß die Applikationssignalisierung (UAID) innerhalb eines Datenpaketes jeweils zwischen einem Paketkopf und dem Datenfeld der zu ermittelnden Daten angeordnet ist.

5. Verfahren nach einem der Ansprüche 1-4, dadurch gekennzeichnet, daß standardisierte Applikationskennungen (UAID) zur eindeutigen Zuordnung von einer zentralen Stelle/Organisation aus vergeben werden.

6. Verfahren nach einem der Ansprüche 1-5, dadurch gekennzeichnet, daß eine Applikationskennung (UAID) von einer Applikationsschicht des OSI-Referenzmodells gesetzt wird und von den tieferen Schichten des Kommunikationsprotokolls transparent übertragen wird.

7. Verfahren nach einem der Ansprüche 1-6, dadurch gekennzeichnet, daß mittels der Applikationskennung zwischen den Teilnehmern die Art einer Datenverbindung, beispielsweise hinsichtlich Kanalcodierung, Datenrate, Datenformat, im Dialogverkehr ausgehandelt wird.

8. Verfahren nach einem der Ansprüche 1-7, dadurch gekennzeichnet, daß zwischen Teilnehmern (1,4) mehrere Applikationen gleichzeitig austauschbar sind und mittels der jeweiligen Applikationssignalisierung (UAID) unterschiedliche Datenkanäle, insbesondere im Parallelbetrieb, bereitgestellt werden.

9. Verfahren nach einem der Ansprüche 1-8, dadurch gekennzeichnet, daß die Signalisierung der Applikationen über ein Kommunikationsnetz geführt wird, welches zumindest teilweise keine oder nur eine unvollständige Diensteunterstützung bietet, z. B. UMTS.

10. Verfahren nach einem der Ansprüche 1-9, dadurch gekennzeichnet, daß die Applikationskennung (UAID) durch einen Code variabler Länge, z. B. dem Huffmann-Code, dargestellt wird.

11. Verfahren nach einem der Ansprüche 1-10, dadurch gekennzeichnet, daß der Wertebereich der Applikationskennung (UAID) in verschiedene Klassen unterteilt ist.

12. Verfahren nach einem der Ansprüche 1-11, dadurch gekennzeichnet, daß eine Applikationskennung (UAID) insbesondere zur Einsparung von Bandbreite auf eine kürzere, temporäre Kennung abgebildet wird, nachdem diese zuvor zwischen den Teilnehmern signalisiert wurde.

13. Verfahren nach einem der Ansprüche 1-12 dadurch gekennzeichnet, daß die Applikationskennung (UAID) bei einer audiovisuellen Verbindung angibt, welche Codierungsarten für Sprach- und/oder Videodaten senderseitig verwendet werden und welche Decodierungsarten empfangsseitig zu verwenden sind.

14. Einrichtung zur Signalisierung von Applikationen zwischen mindestens zwei Teilnehmern eines digitalen Kommunikationsnetzes mit einer jeweils einem Endgerät (1) senderseitig zugeordneten Baugruppe (6), welche jeweils eine aus einem binären Wort, insbesondere fester Länge bestehende Applikationskennung (UAID) für eine Applikation bereitstellt, die einem Zielteilnehmer angibt, wie eine jeweilige Applikation zu verarbeiten ist.

15. Einrichtung zur Signalisierung von Applikationen zwischen mindestens zwei Teilnehmern eines digitalen Kommunikationsnetzes mit einer jeweils einem Endgerät (4) empfangsseitig zugeordneten Auswerteeinheit (7) für mindestens eine senderseitig bereitgestellte Applikationskennung (UAID), die einem Zielteilnehmer angibt, wie diese Applikation/en zu verarbeiten ist/sind.
